# EUROPEAN PATENT APPLICATION

(11) **EP 2 725 772 A1**
(43) Date of publication of application: **30.04.2014**
(21) Application number: 12189670.8
(22) Date of filing: 24.10.2012
(51) Int. Cl.: H04N 1/00

(54) **Method for identifying a scan job file to a user**

(71) Applicant: Océ-Technologies B.V., 5914 CA Venlo (NL)
(72) Inventor: Krikke, N., 6511 WP NIJMEGEN (NL); Dijkstra-Pinto Leite, J.E., 5616 BS EINDHOVEN (NL)
(74) Representative: Jetten, Mark Peter Marie

(57) **Abstract**

A computer implemented method is provided for identifying a scan job file to a user, the method comprising the steps of: scanning an image and in response providing a scan job file of the image; storing the scan job file on a data storage means; generating a reference code which references the scan job file on the data storage means; and providing the reference code on an information exchange interface. The method using the reference code supports a secure and personal access to the location of the scan job file on the data storage means. The reference code may be received on a mobile device and may be removed from the information exchange interface in response to a user input or in response to a received acknowledge notice.

## Description

### Field of the Invention

The present invention relates to a method for identifying a scan job file to a user. The present invention further relates to a computer-program product that executes the method according to the invention. The present invention further relates to a scanning system for identifying a scan job file on a mobile device, the scanning system comprising a scanning device and a mobile device. The present invention further relates to a scanning device according to the invention. The present invention further relates to a mobile device according to the invention.

### Background of the Invention

In a known method a user of a scanning device first provides or selects a personal mail box address for a scan job file and sub-sequently performs a scan operation of an image on the scanning device. In response to the scan operation a scan job file is created. The scan job file is stored on a data storage means and a uniform resource locator, url, which provides the location of the scan job file, is sent to the personal mail box. The user receives the uniform resource locator in the selected personal mail box. The user connects to the data storage means by using the uniform resource locator, optionally previews the scan job file, and retrieves the scan job file from the data storage means.

The known method has the disadvantage that the user needs to provide a personal mail box address to the scanning device. On the other hand the user may want to securely retrieve the scan job file without the use of a personal mail box while not revealing the presence of the scan job file to other users of the scanning device.

### Summary of the Invention

It is accordingly an object of the present invention to provide a method for identifying a scan job file to a user.

This object is attained by a computer implemented method for identifying a scan job file to a user, the method comprising the steps of: scanning an image and in response providing a scan job file of the image; storing the scan job file on a data storage means; generating a reference code which references the scan job file on the data storage means; and providing the reference code on an information exchange interface.

The user scans the image using a scanning device. The scanning device may be a stand alone scanning device and may be a component of an image processing system, such as a copier machine. In response to the scan operation a scan job file is created, which scan job file contains image data corresponding to the image. The scan job file is stored on a data storage means. The data storage means may be a component of the scanning device, and the data storage means may be a part of a server, etc, which is connected, e.g. via a network, to the scanning device. A reference code is generated, which references the scan job file on the data storage means. The reference code may be generated by a control unit of the scanning device and may be generated by a reference code generating means, which is operating on a server, which is connected both to the scanning device and to the data storage means, etc. The method using the reference code supports a secure and personal access to the location of the scan job file on the data storage means. The reference code may be an optical, machine readable code, may be a string, may be a uniform resource locator, may be a numerical code, etc. The optical, machine readable code may for example be a linear barcode and may be a 2-dimensional barcode. The 2-dimensional barcode is preferably a quick reference, QR, code. The reference code is provided on an information exchange interface. The information exchange interface may be a local user display of the scanning device. Alternatively the information exchange interface may be a radio communication device of the scanning device, preferably a near field communication device.

In an embodiment of the method, the reference code is an optical, machine readable identifier and in step d) the information exchange interface comprises a local user display of the scanning device. The local user display is used to display the optical, machine readable identifier to the user. The local user display may reveal a linear barcode, may reveal a 2-dimensional barcode, which comprises a plurality of black and white areas, such as a quick reference code, and may reveal a 2-dimensional barcode, which comprises a plurality of areas having various colors, such as a High Capacity Color Barcode. The user display may be part of the user interface of the scanning device for operating the scanning device. This has the advantage that the user display is both used for operating the the scanning device and for providing the optical, machine readable identifier.

In an embodiment of the method, in step d) the information exchange interface comprises a radio communication device of the scanning device. The radio communication device is preferably a near field communication, NFC, device. The information exchange interface is suitably selected such that the reference code is only revealed to the present user of the scanning device, which is present adjacent to the scanning device for scanning the image. For example, the near field communication device uses radio communcation technology suitable for short range communication at typically less than 0.2 meter. Therefore only the present user of the scanning device may have access to the information exchange interface for receiving the provided reference code.

Furthermore the information exchange interface may comprise a bluetooth communication device, wherein a bluetooth connection is established by enabling and pairing between the bluetooth communication device and a mobile device operated by the user. In a particular example according to an out of band method, OOB, which is provided in Bluetooth v2.1, the near field communication may be used to exchange information to enable the pairing step between the bluetooth communication device and the mobile device, which is operated by the user (see White paper: "Bluetooth Secure Simple Pairing User Interface Flow", published September 13, 2007). In a particular embodiment the near field communication device may be used to enable and configure a communication link of the mobile device to a Wi-Fi network thereby connecting to the information exchange interface according to the invention.

In an embodiment of the method, the method further comprises the step of: receiving the reference code on a mobile device, the reference code being received from the information exchange interface. The optical, machine readable identifier may be captured by a camera component of the mobile device. Alternatively the optical, machine readable identifier may be captured by a hand held scanning sensor of the mobile device. The reference code may also be transmitted by radio communication to the mobile device, for example by a near field communication link or by a paired bluetooth communication link.

In an embodiment of the method, the method further comprises the step of: removing the reference code from the information exchange interface in response to a user input or in response to a received acknowledge notice.The reference code may be removed from the information exchange interface, for example the local user display, in response to a user input at the local user display. The user may request the removal of the reference code after the reference code is received. Alternatively the user may request the removal of the reference code from the information exchange interface without receiving the reference code, for example when the scan job file is to be ignored or discarded. When the scan job file is to be discarded accordingly the scan job file may be removed from the data storage means. The reference code may also be removed in response to a received acknowledge notice, for example which is automatically send to the information exchange interface through a radio communication when the reference code has been received by the mobile device via the radio communication link.

In an embodiment of the method, the method further comprises the step of: decoding the reference code thereby deriving the location of the scan job file. By decoding the reference code the location of the scan job file is derived. The reference code may include the full path of the location of the scan job file, such as a uniform resource locator. Alternatively the reference code may be decoded by a dedicated algorithm, for example implemented in a mobile app in the mobile device. The dedicated algorithm provides a first part of the path to the location of the scan job file, and wherein the reference code contains the remaining part of the location of the scan job file. The decoding step may be performed on the mobile device. The decoding step may also be performed by a reference code decoding means, which is located on a remote processor, such as on a server, which is connected to mobile device.

In an embodiment of the method, the method further comprises the steps of: providing a connection between the mobile device and the data storage means and selecting the scan job file; and transferring the scan job file from the data storage means to the mobile device and / or transferring the scan job file from the data storage means to a remote storage means. A wireless connection may be established between the mobile device to the data storage means via a network, wherein the data storage means is connected to the network. The user of the mobile device may suitably select to transfer the scan job file to the mobile device. For example for previewing and / or storing the scan job file on the mobile device. Furthermore the user of the mobile device may suitably select to transfer the scan job file to a remote storage means, for example a file sharing service (such as DropBox). The advantage is that the transfer of the scan job file to the remote storage means may be faster than the transfer to mobile device and that the scan job file does not have to be stored in the memory of the mobile device, which may be relatively small in storage capacity.

In an embodiment of the method, the method further comprises the step of: removing the scan job file from the data storage means. The scan job file may be removed in response to a user input. Furthermore the scan job file may be removed automatically from the data storage means in response to the transfer step of the scan job file to the mobile device and / or the transfer step to the remote storage means. This enhances the personal access and secure use of the scan job file by the receiver of the reference code.

In another aspect of the invention a computer-program product is provided that executes the method according to the invention when executed on a processor.

In another aspect of the invention a scanning system is provided for identifying a scan job file to a user, the scanning system comprising:
a scanning device for scanning an image on a recording substrate and a mobile device, the scanning device comprising a scanning station for converting the image on the recording substrate to image data;
the scanning system further comprising: - an image converting means for converting the image data to a scan job file; - a data storage means for storing the scan job file; - a reference code generating means for generating a reference code, which references the scan job file on the data storage means;- an information exchange interface for providing the reference code to the mobile device;- a reference code decoding means for decoding the refererence code thereby deriving the location of the scan job file;
the mobile device comprising an identifier receiving means for receiving the reference code from the information exchange interface.

The scanning device may be a stand alone scanning device and may be a component of an image processing system, such as a copier machine. The image converting means is preferably implemented on the scanning device. The data storage means may be a component of the scanning device, and the data storage means may be a part of a server, etc., which is connected, e.g. via a network, to the scanning device. The reference code generating means may be implemented on the scanning device and may be implemented on a server, which is connected both to the scanning device and to the data storage means. The information exchange interface may be a local user display of the scanning device. Alternatively the information exchange interface may be a radio communication device of the scanning device, preferably a near field communication device. The mobile device may be a mobile phone, may be a personal digital assistant or may be a laptop. The identifier receiving means of the mobile device may be a camera for capturing an optical, machine readable identifier, may be a radio communication device, etc. The identifier receiving means is suitably selected in order to connect to the information exchange interface. The reference decoding means may be a dedicated algorithm, which is preferably implemented in a mobile app on the mobile device, and may be a generic reference decoding computer program, which is optionally located on a remote processor, such as on a server, which is connected to mobile device.

In an embodiment of the scanning system, the reference code comprises an optical, machine readable code and wherein the information exchange interface is a user display, which is locally connected to the scanning device for showing the reference code. Preferably the local user interface of the scanning device for operating the scanning device comprises the user display for showing the reference code.

In an embodiment of the scanning system, the information exchange interface comprises a radio communication device, which is locally connected to the scanning device for sending the reference code. The radio communication device is preferably a near field communication device, which is locally connected to the scanning device and which is configured for establishing a secure link to the mobile device, which is present in proximity of the near field communication device.

In an embodiment of the scanning system, the mobile device comprises means for establishing a wireless connection to the data storage means via a network, the mobile device further comprising previewing means for previewing the scan job file on the mobile device, wherein the data storage means is operatively connected to the network. The means for establishing a wireless connection may for example provide a Wi-Fi connection. The network may comprise a local area network and may comprise a wide area network. The previewing means may request via the network and sub-sequently process a preview file of the scan job file, which preview file may reflect the content of the scan job file while being different in one aspect of the scan job file, e.g. preferably the preview file having a smaller size. This has the advantage that the user may easily inspect the scan job file prior to transferring the scan job file and in response may decide whether to transfer the scan job file to either the mobile device and / or to transfer the scan job file to a remote storage means

In another aspect of the invention a scanning device is provided according to the invention.

In another aspect of the invention a mobile device is provided, wherein the mobile device comprises means for establishing a wireless connection to the data storage means via a network, the mobile device further comprising previewing means for previewing the scan job file on the mobile device, wherein the data storage means is operatively connected to the network.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### BRIEF DESCRIPTION OF THE DRAWINGS

Hereinafter, the present invention is further elucidated with reference to the appended drawings showing non-limiting embodiments and wherein
Fig. 1A shows a set-up of a user interacting with a scanning system according to the present invention.
Fig. 1B shows an embodiment of the present invention, wherein the information exchange interface 16 is a user display.
Fig. 1C shows an embodiment of the present invention, wherein the information exchange interface 16 is a near field communication device.
Fig.2 shows a block diagram of a system supporting QR code illustrating a recognition process and a connecting process between a mobile device and a data storage means whereon the scan job file is stored according to the present invention.
Fig. 3 shows a flow diagram of an embodiment of the present invention for the identifying a scan job file to a user.
Fig. 4A shows a flow diagram of an embodiment of the present invention for receiving the reference code on a mobile device and retrieving the scan job file.
Figure 4B illustrates a flow diagram of a preview process of the scan job file according to the present invention.
Fig. 5 shows an embodiment of a user display of the present invention for operating a scanning device according to the invention.

### DETAILED DESCRIPTION OF EMBODIMENTS

The present invention will now be described with reference to the accompanying drawings, wherein the same reference numerals have been used to identify the same or similar elements throughout the several views.

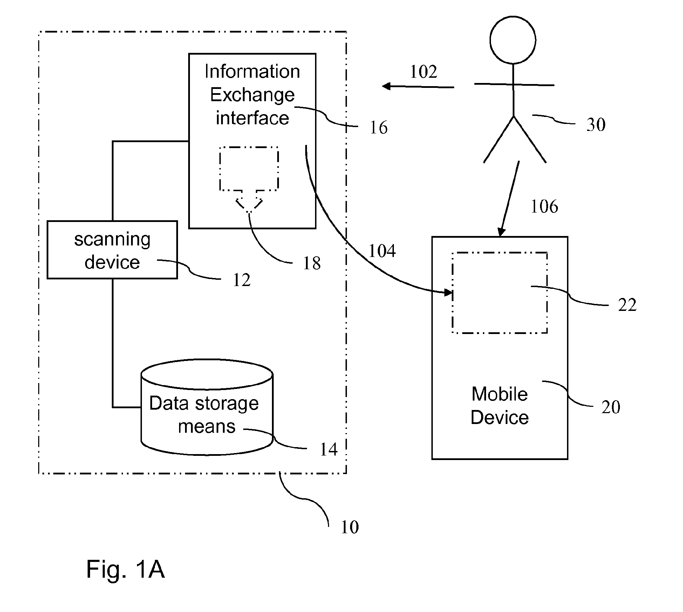

Fig. 1A shows a set-up of a user interacting with a scanning system according to the present invention. The scanning system 10 comprises a scanning device 12 for scanning an image and in response providing a scan job file which contains the image data of the scanned image, a data storage means 14 for storing the scan job file and an information exchange interface 16. The data storage means 14 is operatively connected to the scanning device 12. The data storage means 14 may be a component of the scanning device 12. The information exchange interface 16 is operatively connected to the scanning device 12.

The user 30 with a mobile device 20 makes a scan of an image using the scanning device 12, thereby operating the scanning device 12 through a local user interface (not shown) of the scanning device as is indicated by arrow 102. The local user interface of the scanning device may comprise the information exchange interface 16. A scan job file is created in response to the scan and is stored on the data storage means 14. A reference code 18 is generated which references the scan job file on the data storage means 14. The reference code 18 is provided through the information exchange interface 16. The information exchange interface 16 interacts with the mobile device as is indicated by arrow 104. The mobile device 20 comprises an identifier receiving means 22 for receiving the reference code from the information exchange interface 16. The user operates the mobile device as is indicated by arrow 106. After establishing a connection between the information exchange interface 16 and the identifier receiving means 22 automatically the reference code 18 is received on the mobile device 20.

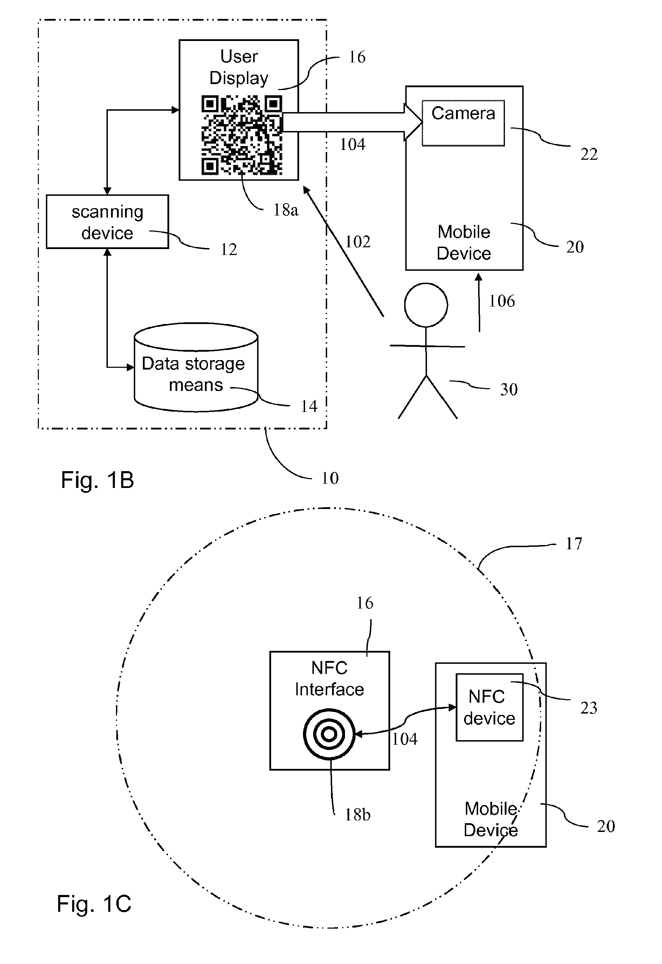

Examples of various interactions of the information exchange interface 16 with the mobile device 20 is further shown in figure 1B and 1C.

In fig. 1B an embodiment is shown, wherein the information exchange interface 16 is a user display. The user display 16 shows the reference code 18. The reference code 18 is a quick reference code 18a, which is a 2-dimensional barcode. The mobile device 20 comprises a camera 22, which is operated by a camera application. The camera application on the mobile device 20 is operated by the user 30. The reference code 18a is captured on the mobile device 20 by using the camera 22 as is indicated by arrow 104.

In fig. 1C an embodiment is shown, wherein the information exchange interface 16 is a near field communication device. The near field communication device 16 has a typical maximum distance 17 in which a connection can be made to a mobile device 20. For example the threshold distance is 0,2 meters. The mobile device 20 comprises a near field communication component 23 which is controlled by a radio communication application. The mobile device 20 is within the maximum distance 17 and is able to interact with the near field communication device 16 by means of the near field communication component 23. The user may acknowledge to the information exchange interface 16 that the correct mobile device 20 is within the threshold distance 17. After establishing a two-way secure link between nfc device 16 and nfc component 23 as is indicated by arrow 104, the reference code 18b is retrieved by the mobile device 20. Furthermore a received acknowledge notice may be send by the mobile device 20 to the nfc device 16, thereby indicating that the reference code 18b has succesfully been received. In this embodiment no further user interaction is necessary for retrieving the reference code 18b on the mobile device 20.

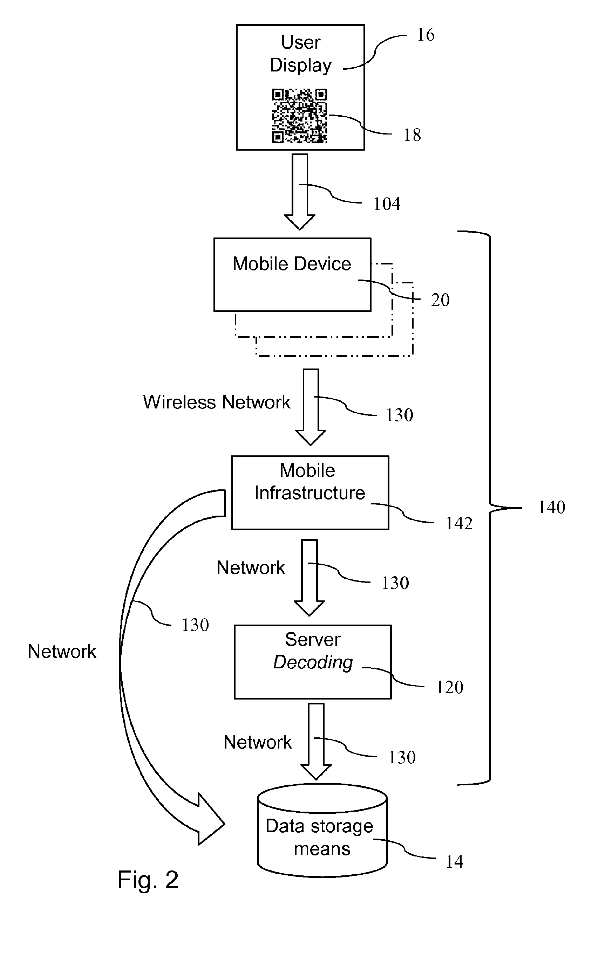

In Fig.2 a block diagram is shown of a system supporting QR code illustrating a recognition process and a connecting process between a mobile device and a data storage means whereon the scan job file is stored. The system includes a network 140 supporting QR code recognition. The network includes, for example, a mobile infrastructure 142 comprising one mobile device 20, or optionally more mobile devices 20, coupled or connected to one or more wired networks, the internet and other network types 130 over which communication can occur. The mobile device 20 can communicate with a server 120 supporting QR code recognition services via the network 140. In an embodiment, a mobile device 20 is a mobile phone, personal digital assitant, personal computer, work station, or other device capable of scanning QR codes via an optical scanner, but is not so limited.

When a user operating the mobile device 20 wishes to communicate with the server 120 for QR code recognition activities, the user scans the QR code from the information exchange display 16 and transfers the QR code, or causes the QR code to be transferred, to the server 120 that supports QR code recognition processing. In response the decoded QR code is send back to the mobile device 20.

In an alternative embodiment, the QR code recognition process is performed on the mobile device 20 by an installed QR decoding program. This has the advantage that the mobile device is able to autonomously decode the QR code without the need to communicate the QR code to a server via a network.

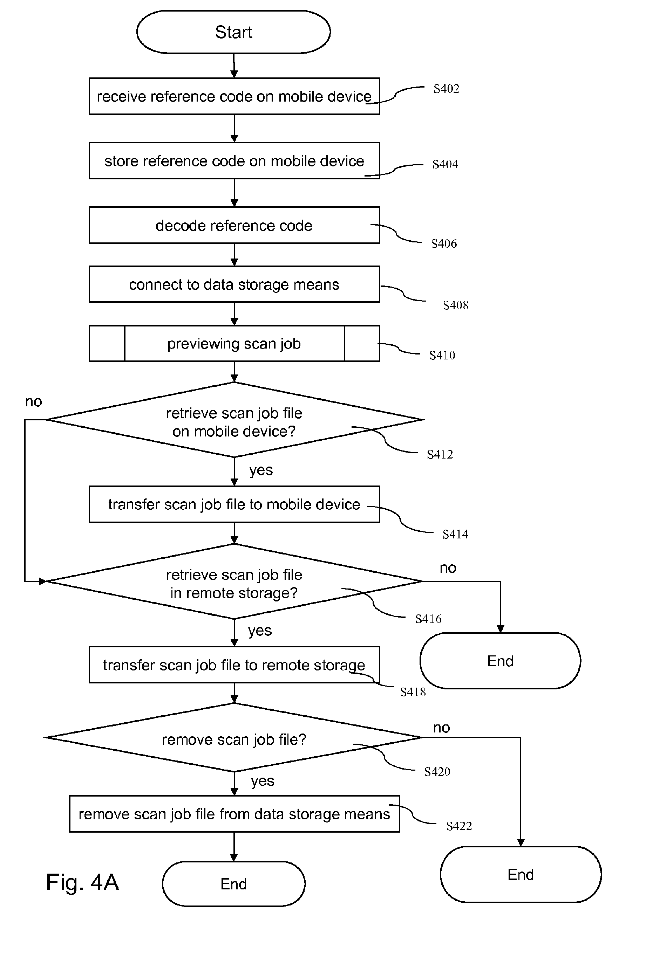

In a next step the mobile device 20 is able to connect to the data storage means 14 via the network 140, either via the server 120 or connecting directly while by-passing the server 120, and to request the scan job file using the identity of the scan job file, which is derived from the QR code. The process of retrieving the scan job file is further explained in flow diagram Fig. 4A.

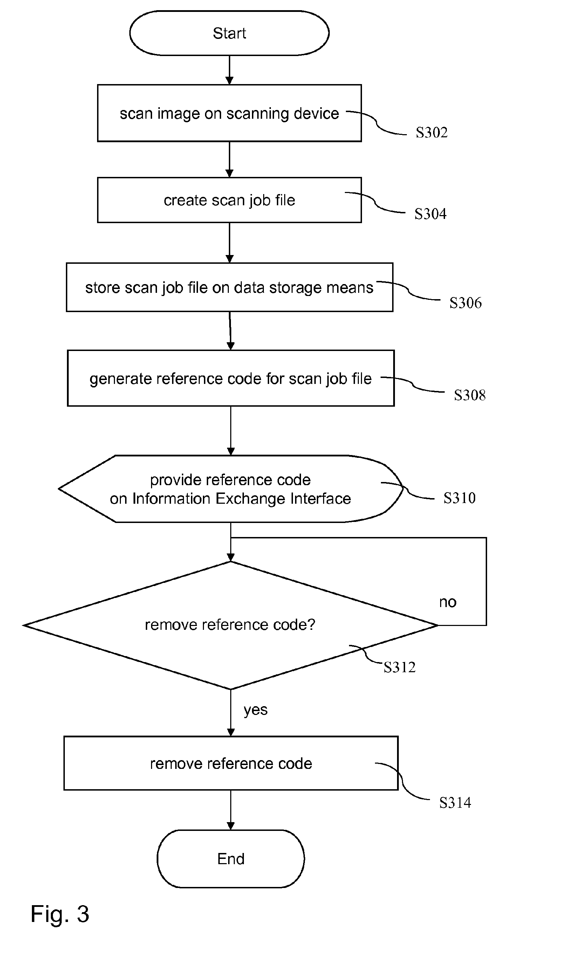

Fig. 3 is a flow diagram of an embodiment for identifying a scan job file to a user. In step S302 an image is scanned on a scanning device, which is operated by a user.

In step S304 a scan job file is created by an image converting means, thereby converting the image data to the scan job file. In step S306 the scan job file is stored on a data storage means 14. The data storage means14 is suitably selected, for example a local data storage means of the scanning device. In step S308 a reference code 18 is generated by a reference code generating means, which reference code 18 references the scan job file on the data storage means 14. For example the reference code 18 references a network access address (e.g. IP address) of the data storage means 14 and an identity of the scan job file. In step S31 0 the reference code 18 is provided on the information exchange interface 16, for example a user display. In step S312 it is judged whether the reference can be removed from the information exchange interface 16. In response to a user input, which indicates that the reference code has been received and / or indicates that the reference code can be discarded, it is decided to remove the reference code in step S314. Alternatively in response to a received acknowledge notice, for example received from a radio communication link, it may also be decided to remove the reference code in step S314. Optionally in an embodiment it is decided at a predetermined time after providing the reference code in step S31 0, for example after 5 minutes, to remove the reference code even when no user input or received acknowledge notice has been received within the predetermined time. In this way the change of access of another user to the scan job file is reduced. After the removal of the reference code the process is ended.

Fig. 4A is a flow diagram of an embodiment for receiving the reference code on a mobile device and retrieving the scan job file. In step S402 the reference code 18 is received on the mobile device 20. For example a OR code is captured by a camera of the mobile device 20. In step S404 the reference code 18 is stored in the memory of the mobile device 20. In step 406 the reference code is decoded by a reference code decoding app, which is installed on the mobile device, thereby deriving the location of the scan job file. The reference code references the location of the scan job file on the data storage means. In particular a dedicated reference code decoding app (e.g. provided by the scanning system supplier) may be installed on the mobile device 20, wherein the app for example contains the network access address (e.g. IP address) of the data storage means 14 and the reference code itself does not provide such information. In this way the access to the scan job file is restricted to users of the dedicated OEM reference code decoding app. In step 408 a connection is made by the mobile device 20 to the data storage means 14, for example using a wireless connection via a network.

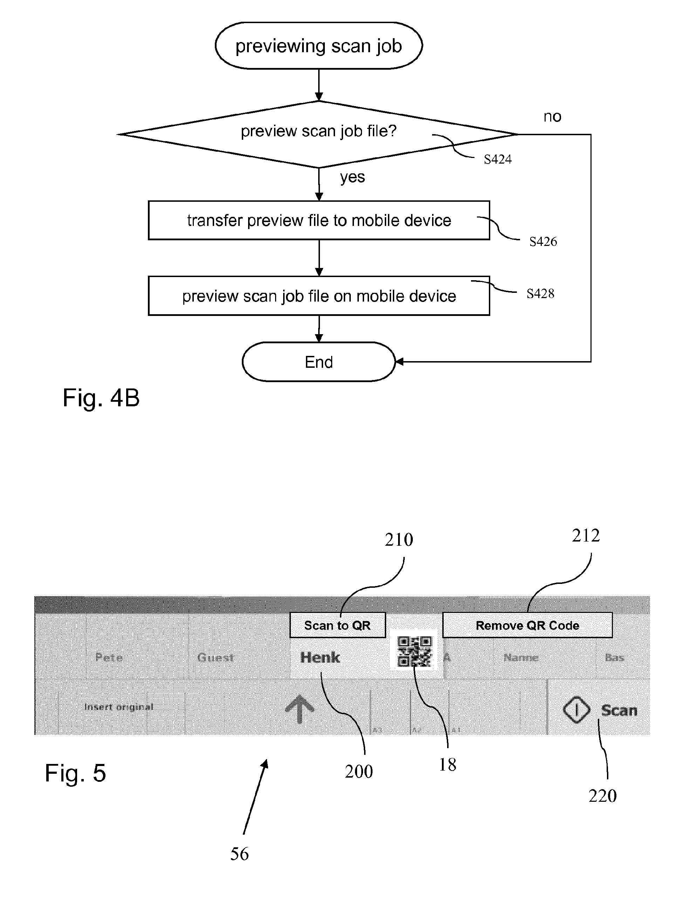

In step S41 0 a preview process is carried out as is further illustrated in Figure 4B. The preview process comprises steps S424, S426 and S428. In step S424 it is judged whether to preview the scan job file on the mobile device 20. In case no proceeded is with step S412. In case yes, in step S426 a preview file of the scan job file is transferred to the mobile device 20 and in step S428 the scan job file is previewed on the display of the mobile device 20. The preview file is in an embodiment a low-resolution file having a smaller size than the scan job file or in another embodiment the preview file contains a suitably selected part of the scan job file.

In step S412 it is judged whether to retrieve the scan job file on the mobile device 20, for example based on a user input. In case no, proceeded is to step S416. In case yes, in step S414 the scan job file is transferred over the wireless connection from the data storage means 14 to the mobile device 20. In step S416 it is judged whether to retrieve the scan job file in a file sharing service, such as Dropbox, or any other remote storage. In case yes, in step S418 the scan job file is transferred from the data storage means 14 to the remote storage. In an embodiment step S418 comprises a step, wherein the user may suitably select a remote storage. Alternatively in step S418 a default remote storage may be used for storing the scan job file. In step S420 it is judged whether to remove the scan job file from the data storage means 14. For example in response to a transfer of the scan job file to either the mobile device 20 (S414) or the remote storage (S418) the mobile device 20 may be requested whether the scan job file may be removed from the data storage means 14. In case the user indicates yes on the mobile device 20, the scan job file is removed from the data storage means 14 in step S422. In case no the process may be ended. Optionally the data storage means 14 may decide automatically to remove the scan job file after a predetermined time, for example one week. The predetermined time may be a typical period within which the user is expected to retrieve the scan job file.

Fig. 5 shows an embodiment of a user display for operating a scanning device according to the invention. The user display 56 comprises a touch screen user interface for receiving user input. The user may or may not first select a user name 200, for example Henk in the shown example, on the user interface of the scanning device. If the user wants to remain unidentified, he may select a "Guest" identity or may remain unidentified. The user selects the scan mode, "Scan to QR code", by pushing button 210. The user inputs the original containing the image in the input station of the scanning device 12. The user starts the scan operation of the image by pushing button 220. The scan job file is stored in the data storage means 14, which is operatively connected to the scanning device 12. A QR reference code 18 is shown on the user display 56. The QR reference code 18 is in this embodiment only shown on the user display 56, after selecting the user name 200. After the user has captured the QR reference code on a mobile device 20, the user may select a remove button 212 on the user display 56. In response the QR code is removed from the user display 56.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A computer implemented method for identifying a scan job file to a user, the method comprising the steps of:
a) scanning an image and in response providing a scan job file of the image;
b) storing the scan job file on a data storage means;
c) generating a reference code which references the scan job file on the data storage means;
d) providing the reference code on an information exchange interface.

2. The method according to claim 1, wherein the reference code is an optical, machine readable identifier and wherein in step d) the information exchange interface comprises a local user display of the scanning device.

3. The method according to claim 1, wherein in step d) the information exchange interface comprises a radio communication device of the scanning device.

4. The method according to claim 1, wherein the method further comprises the step of:
e) receiving the reference code on a mobile device, the reference code being received from the information exchange interface.

5. The method according to claim 1, wherein the method further comprises the step of:
f) removing the reference code from the information exchange interface in response to a user input or in response to a received acknowledge notice.

6. The method according to claim 4, wherein the method further comprises the step of:
g) decoding the reference code thereby deriving the location of the scan job file.

7. The method according to claim 4, wherein the method further comprises the steps of:
h) providing a connection between the mobile device and the data storage means and selecting the scan job file;
i) transferring the scan job file from the data storage means to the mobile device and / or transferring the scan job file from the data storage means to a remote storage means.

8. The method according to claim 7, wherein the method further comprises the step of:
j) removing the scan job file from the data storage means.

9. Computer-program product that executes a method according to any of claims 1 - 8 when executed on a processor.

10. A scanning system for identifying a scan job file to a user, the scanning system comprising:
a scanning device for scanning an image on a recording substrate and a mobile device, the scanning device comprising:
- a scanning station for converting the image on the recording substrate to image data;
the scanning system further comprising:
- an image converting means for converting the image data to a scan job file;
- a data storage means for storing the scan job file;
- a reference code generating means for generating a reference code, which references the scan job file on the data storage means;
- an information exchange interface for providing the reference code to the mobile device;
- a reference code decoding means for decoding the reference code thereby deriving the location of the scan job file;
the mobile device comprising:
- an identifier receiving means for receiving the reference code from the information exchange interface.

11. The scanning system according to claim 10, wherein the reference code is an optical, machine readable code and wherein the information exchange interface comprises a user display, which is locally connected to the scanning device for showing the reference code.

12. The scanning system according to claim 10, wherein the information exchange interface comprises a radio communication device, which is locally connected to the scanning device for sending the reference code.

13. The scanning system according to claim 10, wherein the mobile device comprises means for establishing a wireless connection to the data storage means via a network, the mobile device further comprising previewing means for previewing the scan job file on the mobile device, wherein the data storage means is operatively connected to the network.

14. Scanning device according to claim 11 - 12.

15. Mobile device according to claim 13.
